# EUROPÄISCHE PATENTSCHRIFT

(11) **EP 2 195 917 B1**
(45) Veröffentlichungstag und Bekanntmachung des Hinweises auf die Patenterteilung: **21.03.2012**
(21) Anmeldenummer: 08841054.3
(22) Anmeldetag: 27.10.2008
(51) Int. Cl.: H02P 7/28, B25B 23/14, B25B 23/142, B25F 5/00, G01P 13/04

(54) **SCHALTUNGSANORDNUNG FÜR EIN ELEKTROWERKZEUG**
CIRCUIT ARRANGEMENT FOR A POWER TOOL
MONTAGE ÉLECTRIQUE POUR UN OUTIL ÉLECTRIQUE

(30) Priorität: 27.10.2007 DE 102007051502
(43) Veröffentlichungstag der Anmeldung: 16.06.2010
(73) Patentinhaber: Marquardt GmbH, 78604 Rietheim-Weilheim (DE)
(72) Erfinder: PATSCHKY, Stefan, 78262 Gailingen (DE)
(74) Vertreter: Otten, Herbert
(86) Internationale Anmeldenummer: PCT/DE2008/001740
(87) Internationale Veröffentlichungsnummer: WO 2009/052808

(56) Entgegenhaltungen:
- WO-A-2007/056172
- DE-A1- 4 429 206
- DE-A1- 10 216 527
- JP-A- 7 222 477

## Beschreibung

Die Erfindung betrifft ein Elektrowerkzeug nach dem Oberbegriff des Patentanspruchs 1 sowie eine Schaltungsanordnung für ein Elektrowerkzeug nach dem Oberbegriff des abhängigen Patentanspruchs 6.

Bei solchen Elektrowerkzeugen handelt es sich insbesondere um Bohrmaschinen, Akku-Bohrer, Akku-Schrauber oder Akku-Schlagschrauber.

Mit einem Elektromotor arbeitende Bohrmaschinen, Akku-Schrauber oder Akku-Schlagschrauber, sind an sich bekannt, beispielsweise aus der WO 2007/056172 A1. Diese besitzen eine Werkzeugaufnahme, die vom Elektromotor angetrieben wird, sowie eine Schaltungsanordnung in der Art einer Steuerelektronik für den Betrieb des Elektromotors im Rechts- und/oder im Linkslauf. Die Schaltungsanordnung weist einen im Motorstromkreis befindlichen Leistungshalbleiter zum Schalten der Spannungsversorgung für den Elektromotor auf.

Akku-Schrauber verfügen in den meisten Fällen über eine mechanische Rutschkupplung, um das übertragene Drehmoment zu begrenzen, Schrauben bündig einzudrehen oder Schrauben und/oder Gewinde vor Zerstörung zu schützen. Die mechanische Rutschkupplung hat jedoch den Nachteil, daß sie in beide Drehrichtungen des Elektromotors wirkt. Dies hat wiederum zur Folge, daß eine Schraube mit einer bestimmten Rutschkupplungseinstellung zwar eingedreht, nicht aber wieder herausgedreht werden kann, ohne daß die Rutschkupplung verstellt wird.

Um den Bedienkomfort des Akku-Schraubers oder des Akku-Schlagschraubers zu erhöhen, kann eine elektronische Drehmomentabschaltung vorgesehen sein, die bei Erreichen eines auf die Werkzeugaufnahme einwirkenden, voreingestellten Drehmoments den Elektromotor abschaltet. Eine solche elektronische Drehmomentabschaltung kann insbesondere als Funktion des Motorstroms bei einem Schrauber oder der Schlagdauer bei einem Schlagschrauber realisiert werden. Die Einstellung des gewünschten Drehmoments oder der gewünschten Schlagzahl erfolgt beispielsweise mittels eines externen Potentiometers. Jedoch stellt sich auch hier das Problem, daß das Herausdrehen der Schraube im Linkslauf erschwert ist.

Hierzu ist bei einem Elektrowerkzeug nach der DE 102 16 527 A1 vorgeschlagen, daß die Drehmomentabschaltung im Linkslauf deaktiviert ist. Zur Deaktivierung der Drehmomentabschaltung im Linkslauf ist ein mit der Drehmomentabschaltung zusammenwirkendes Mittel zur Erkennung der Drehrichtung des Elektromotors am Elektrowerkzeug angeordnet. Damit ist die Drehmomentabschaltung lediglich im Rechtslauf aktiviert. Somit kann der Benutzer in gewohnter Weise mit dem Elektrowerkzeug arbeiten, also im Rechtslauf das gewünschte maximale Drehmoment vorwählen. Im Linkslauf hingegen wird die Drehmomentabschaltung nicht wirksam, womit ein vorzeitiges Abschalten mit unbefriedigendem Arbeitsergebnis vermieden ist.

Der Erfindung liegt die Aufgabe zugrunde, das Elektrowerkzeug, bei dem eine vorzeitige Abschaltung des Elektrowerkzeugs im Linkslauf verhindert ist, weiterzuentwickeln. Insbesondere soll eine Schraube im Linkslauf des Elektrowerkzeugs herausdrehbar sein. Desweiteren soll eine Schaltungsanordnung für das Elektrowerkzeug geschaffen werden, die einen derartigen Betrieb des Elektromotors ermöglicht.

Diese Aufgabe wird bei einem gattungsgemäßen Elektrowerkzeug durch die kennzeichnenden Merkmale des Anspruchs 1 sowie bei einer gattungsgemäßen Schaltungsanordnung durch die kennzeichnenden Merkmale des abhängigen Anspruchs 6 gelöst.

Beim erfindungsgemäßen Elektrowerkzeug besteht das Mittel zur Erkennung der Drehrichtung aus einer Zener-Diode und einen Widerstand zum Abgreifen des Potenzials eines Anschlusses am Elektromotor. Es handelt sich hierbei um eine kostengünstige sowie einfache Ausgestaltung.

Die Schaltungsanordnung in der Art einer Steuerelektronik zum Betrieb des Elektromotors im Rechts- und/oder im Linkslauf weist ein Mittel zur Erkennung der Drehrichtung des Elektromotors auf. Erfingdungsgemäß umfaßt das Mittel zur Erkennung der Drehrichtung eine Zener-Diode und einen Widerstand zum Abgreifen des Potenzials eines Anschlusses am Elektromotor, wodurch in einfacher Art und Weise eine Methode zur Drehrichtungserkennung bei Akku-Schraubern oder Akku-Schlagschraubern realisiert ist.

Weitere Ausgestaltungen der Erfindung sind Gegenstand der Unteransprüche.

Das auf die Werkzeugaufnahme einwirkende aktuelle Drehmoment ist als Funktion des vom Elektromotor aufgenommenen Stroms bestimmbar. Es genügt daher, den Motorstrom zur Bestimmung des Drehmoments zu messen. Falls gewünscht kann auch die Schlagdauer des Elektromotors, die mit dem von der Werkzeugaufnahme ausgeübten Anzugs-Drehmoment korreliert, gemessen werden. Bei Erreichen des jeweiligen Wertes für den Motorstrom und/oder der Schlagdauer entsprechend dem vom Benutzer voreingestellten Drehmoment wird dann der Elektromotor abgeschaltet. Zur Voreinstellung des gewünschten Wertes für das maximale Drehmoment kann in kostengünstiger Weise ein Potentiometer am Elektrowerkzeug dienen.

Zweckmäßigerweise erzeugt in weiterer Ausgestaltung das Mittel zur Erkennung der Drehrichtung ein Signal, wenn der Elektromotor im Linkslauf betrieben wird. Liegt das Signal somit vor, so wird die Drehmomentabschaltung deaktiviert. Liegt das Signal nicht vor, womit der Elektromotor im Rechtslauf betrieben wird, so wird die Drehmomentabschaltung hingegen aktiviert.

Es bietet sich an, daß der Elektromotor mit einer Schaltungsanordnung in der Art einer Steuerelektronik im Rechts- und/oder im Linkslauf betreibbar ist. Dabei kann die Schaltungsanordnung einen im Motorstromkreis befindlichen Leistungshalbleiter zum Schalten der Spannungsversorgung für den Elektromotor umfassen. Somit kann der Elektromotor beispielsweise mit variabel einstellbarer Drehzahl betrieben werden. Desweiteren kann der Leistungshalbleiter zum Abschalten des Elektromotors bei Erreichen des voreingestellten Drehmoments dienen. Der kompakten Anordnung halber ist das Mittel zur Erkennung der Drehrichtung des Elektromotors in der Schaltungsanordnung befindlich.

Der Flexibilität sowie Kompaktheit halber wird der Leistungshalbleiter bevorzugterweise mittels eines Mikroprozessors gesteuert. Beim Linkslauf des Elektromotors wird dann mittels der Zener-Diode sowie mittels des Widerstandes ein Signal erzeugt, das dem Mikroprozessor zur entsprechenden Auswertung zugeführt wird. Bei Vorliegen des Signals, also im Linkslauf des Elektromotors, deaktiviert der Mikroprozessor die Drehmomentabschaltung. Bei Nichtvorliegen des Signals, also im Rechtslauf des Elektromotors, aktiviert der Mikroprozessor hingegen die Drehmomentabschaltung. Je nachdem, ob das Signal "Low" oder "High" ist, kann somit die Drehrichtung vom Mikroprozessor erkannt werden.

Für die Bedienung durch den Benutzer besitzt das Elektrowerkzeug einen elektrischen Schalter. Es bietet sich dann der Einfachheit halber an, daß die Schaltungsanordnung zur Ansteuerung des Elektromotors mitsamt dem Mittel zur Erkennung der Drehrichtung im Gehäuse des elektrischen Schalters angeordnet ist.

Zusammenfassend läßt sich für das erfindungsgemäße Elektrowerkzeug, bei dem es sich um einen Akku-Schrauber oder um einen Akku-Schlagschrauber handeln kann, Nachfolgendes feststellen. Das Elektrowerkzeug ist mit einem im Rechts- und/oder im Linkslauf betreibbaren Elektromotor sowie mit einer Drehmomentabschaltung ausgestattet. Die Drehmomentabschaltung ist im Linkslauf deaktiviert, so daß die Drehmoment-Abschaltung nur im Rechtslauf der Maschine erfolgen kann. Hierzu ist eine Erkennung der Drehrichtung der Maschine herangezogen, indem mittels des vom Mittel zur Erkennung der Drehrichtung erzeugten Signals die Drehmomentabschaltung aktivier- und/oder deaktivierbar ist. Bei einer bevorzugten Ausführung dieses Mittels wird durch Abgreifen des Potenzials eines Motoranschlusses über eine Z-Diode und einen Widerstand ein Signal zum Mikroprozessor gegeben. Je nachdem, ob das Signal "Low" oder "High" ist, kann die Drehrichtung erkannt werden. Mit Hilfe dieses Signals kann dann die Drehmomentabschaltung aktiviert bzw. deaktiviert werden.

Die mit der Erfindung erzielten Vorteile bestehen insbesondere darin, daß eine kostengünstige und sichere Erkennung der Drehrichtung des Elektrowerkzeugs realisiert ist. Desweiteren ist eine Erhöhung des Bedienerkomforts bei Elektrowerkzeugen, insbesondere von Akku-Geräten, gegeben.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen schematischen Schnitt durch ein Akku-Elektrowerkzeug mit einer Ansteuereinrichtung für den Elektromotor und
- Fig. 2: das Schaltbild einer Schaltungsanordnung für die Steuerung des Elektromotors im Akku-Elektrowerkzeug.

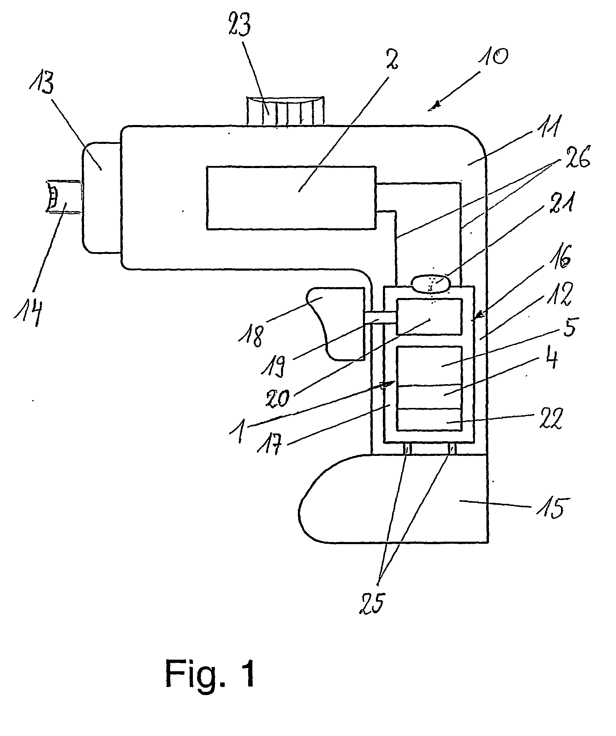

In Fig. 1 ist ein Elektrowerkzeug 10, bei dem es sich vorliegend um eine Akku-Bohrmaschine handelt, schematisch gezeigt. Das Elektrowerkzeug 10 besitzt ein Elektrowerkzeug-Gehäuse 11 mit einem Handgriff 12. Im Elektrowerkzeug-Gehäuse 11 befindet sich ein Elektromotor 2, der zum Antrieb einer Werkzeugaufnahme 13 dient. In der Werkzeugaufnahme 13 befindet sich ein Schraubbit 14 als Werkzeug, um mit Hilfe des Elektrowerkzeugs 10 beispielsweise Schrauben in Werkstücke ein- und/oder ausdrehen zu können. Hierzu ist der Elektromotor 2 im Rechts- und/oder im Linkslauf betreibbar, wobei der Elektromotor 2 mittels eines in den Handgriff 12 einsteckbaren, aufladbaren, aus einem Akku bestehenden Energiespeichers 15 mit elektrischer Energie versorgt wird.

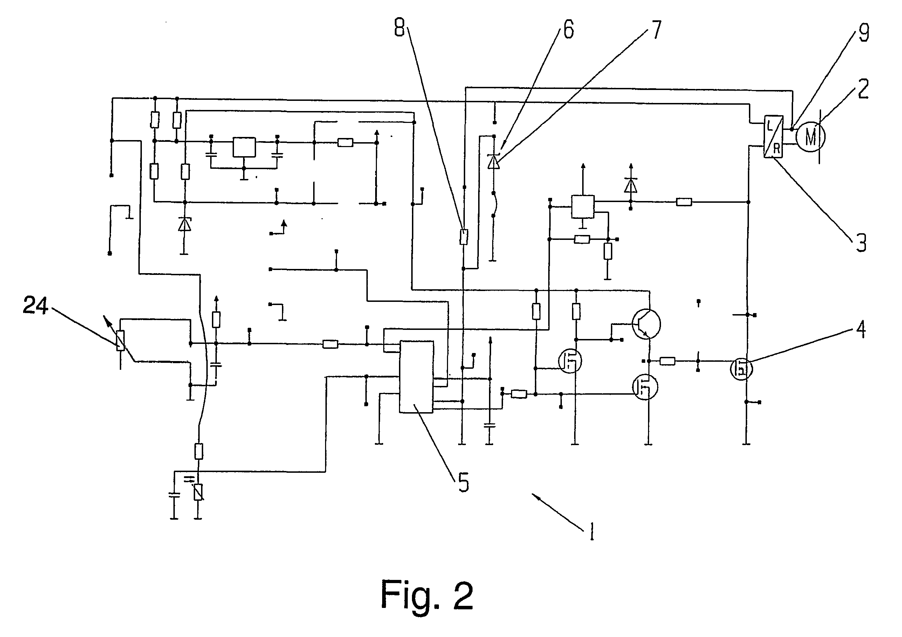

Im Handgriff 12 befindet sich ein Elektrowerkzeugschalter 16 mit einem Schaltergehäuse 17, derart daß der Elektrowerkzeugschalter 16 eine separat vom Elektrowerkzeug 10 montierbare Einheit darstellt. Der Elektrowerkzeugschalter 16 besitzt ein aus dem Handgriff 12 herausragendes Betätigungsorgan 18, das vom Benutzer durch manuelle Bewegung zwischen einer Ausgangsstellung und einer Maximalstellung verstellbar ist. Im Schaltergehäuse 17 befindet sich eine Steuerelektronik 1 zum Betrieb, und zwar zur Steuerung und/oder Regelung des Elektromotors 2, wie dessen Drehzahl, Drehmoment o. dgl., in Abhängigkeit vom Verstellweg des Betätigungsorgans 18, das über einen Stößel 19 auf ein beispielsweise einen Ein-/Aus-Schalter, ein Potentiometer o. dgl. beinhaltendes Schaltmodul 20 im Elektrowerkzeugschalter 16 einwirkt. Mittels eines am Elektrowerkzeugschalter 16 angeordneten, ebenfalls aus dem Elektrowerkzeug-Gehäuse 11 zur manuellen Bedienung durch den Benutzer herausragenden Schiebers 21 ist der in Fig. 2 gezeigte Umschalter 3 für den Recht-/Links-Lauf des Elektromotors 2 anwählbar.

Die Schrauben können mit Hilfe des im Rechtslauf betriebenen Elektrowerkzeugs 10 mit einem vorwählbaren Drehmoment in das Werkstück eingedreht werden. Hierzu ist am Elektrowerkzeug-Gehäuse 11 ein Drehrad 23 angeordnet, mit dessen Hilfe der Benutzer das gewünschte Drehmoment voreinstellen kann. Das Drehrad 23 wirkt hierzu auf ein in Fig. 2 sichtbares Potentiometer 24 ein. Im Elektrowerkzeugschalter 16 befindet sich dann weiter eine Drehmomentabschaltung 22, die bei Erreichen des auf die Werkzeugaufnahme 13 einwirkenden, durch das Drehrad 23 voreingestellten Drehmoments den Elektromotor 2 abschaltet. Das auf die Werkzeugaufnahme 13 jeweils einwirkende Drehmoment ist beispielsweise als Funktion des vom Elektromotor 2 aufgenommenen Stroms bestimmbar.

Wird das Elektrowerkzeug 10 im Linkslauf betrieben, so können wiederum Schrauben aus dem Werkstück herausgedreht werden. Um ein ungehindertes Ausdrehen der Schrauben zu gewährleisten, ist die Drehmomentabschaltung 22 im Linkslauf des Elektrowerkzeugs 10 deaktiviert. Hierfür ist in der Steuerelektronik 1 ein in Fig. 2 gezeigtes Mittel 6 zur Erkennung der Drehrichtung des Elektromotors 2 angeordnet, wobei das Mittel 6 mit der Drehmomentabschaltung 22 dementsprechend zusammenwirkt. Für dieses Zusammenwirken dient ein vom Mittel 6 zur Erkennung der Drehrichtung erzeugtes Signal, das die Drehmomentabschaltung 22 im Linkslauf des Elektromotors 2 deaktiviert. Bei Nichtvorliegen des Signals hingegen wird die Drehmomentabschaltung 22 aktiviert, da sich der Elektromotor 2 dann im Rechtslauf befindet. Die Aktivierung sowie Deaktivierung der Drehmomentabschaltung 22 wird von einem Mikroprozessor 5 in der Steuerelektronik 1 bewerkstelligt.

Die in der Art einer Steuerelektronik für den Betrieb des Elektromotors 2 ausgebildete Schaltungsanordnung 1 ist näher in Fig. 2 gezeigt. Der Elektromotor 2 ist im Rechts- und/oder im Linkslauf betreibbar, wobei die jeweilige Drehrichtung mittels eines Umschalters 3 einstellbar ist. Der Elektromotor 2 dient für den Antrieb des Elektrowerkzeugs 10, und zwar insbesondere für einen Akku-Schrauber. Im Motorstromkreis befindet sich ein Leistungshalbleiter 4, beispielsweise ein MOS-FET, zum Schalten der Spannungsversorgung für den Elektromotor 2. Dadurch ist die Drehzahl des Elektromotors 2 mittels einer Pulsweiten-Modulation einstellbar. Hierzu wird wiederum der Leistungshalbleiter 4 von einem Mikroprozessor 5 entsprechend einer Vorwahl der Drehzahl durch den Benutzer gemäß der Stellung des Betätigungsorgans 18 angesteuert.

Die Schaltungsanordnung 1 weist das Mittel 6 zur Erkennung der Drehrichtung des Elektromotors 2 auf. Das Mittel 6 zur Erkennung der Drehrichtung besteht aus einer Zener-Diode 7 und einem Widerstand 8 zum Abgreifen des Potenzials eines Anschlusses 9 am Elektromotor 2. Mittels der Zener-Diode 7 sowie dem Widerstand 8 wird ein Signal erzeugt. Das Signal kann die Werte "Low" oder "High" entsprechend der jeweils eingestellten Drehrichtung des Elektromotors 2 annehmen. Das Signal wird dem Mikroprozessor 5 zugeführt, der dann wiederum anhand des Wertes, den das Signal aufweist, die Drehrichtung des Elektromotors 2 erkennt.

Das die Schaltungsanordnung 1 beinhaltende Elektrowerkzeug 10, das mittels des Elektromotors 2 angetrieben wird, ist mit einer Drehmomentabschaltung 22 versehen. Die Drehmomentabschaltung 22 ist lediglich im Rechtslauf des Elektromotors 2 wirksam, im Linkslauf des Elektromotors 2 jedoch deaktiviert. Zur Aktivierung und/oder Deaktivierung der Drehmomentabschaltung 22 dient das mittels des vom Mittel 6 zur Erkennung der Drehrichtung erzeugte Signal.

Wie näher in Fig. 1 gezeigt ist, ist es aufgrund der kompakten Anordnung sowie der Funktionssicherheit vorteilhaft, wenn der Schalter 16 für das Elektrowerkzeug 10 die Steuerelektronik 1 beinhaltet. Es ist dann die gesamte Schaltungsanordnung 1, beispielsweise auf einer Leiterplatte, im Schaltergehäuse 17 befindlich. Desweiteren ist dann auch die Drehmomentabschaltung 22 sowie das Mittel 6 zur Erkennung der Drehrichtung im Schaltergehäuse 17 angeordnet. Am Schaltergehäuse 17 befinden sich dann entsprechende Anschlüsse für die Zuleitungen 25 vom Energiespeicher 15 sowie für die Zuleitungen 26 zum Elektromotor 2. Der elektrische Schalter 16 stellt somit eine separat herstellbare Einheit dar, die lediglich bei Montage des Elektrowerkzeugs 10 in das Elektrowerkzeug-Gehäuse 11 einzusetzen ist.

Die Erfindung kann für alle Arten von drehenden Akku-Geräten verwendet werden, insbesondere für Schrauber und Schlagschrauber sowie für Geräte, welche mit einem Mikroprozessor ausgestattet sind. Bei einem Schlagschrauber ist das aktuell einwirkende Drehmoment beispielsweise durch die Schlagdauer des Elektromotors bestimmbar. Jedoch ist die Erfindung nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann eine solche Schaltungsanordnung zur Deaktivierung der Drehmomentabschaltung im Linkslauf nicht nur an Akku-Elektrowerkzeugen, sondern auch an sonstigen mittels Netz betriebenen Elektrowerkzeugen Verwendung finden. Soweit eine Elektronik zur Drehzahlsteuerung und/oder -regelung o. dgl. vorhanden ist, kann es sich bei dieser für ein Elektrowerkzeug mit Netzbetrieb auch um eine Phasenanschnittsteuerung, eine Phasenabschnittsteuerung o. dgl. handeln.

### Bezugszeichen-Liste:

- 1:: Schaltungsanordnung / Steuerelektronik
- 2:: Elektromotor
- 3:: Umschalter
- 4:: Leistungshalbleiter
- 5:: Mikroprozessor
- 6:: Mittel zur Erkennung der Drehrichtung
- 7:: Zener-Diode
- 8:: Widerstand
- 9:: Anschluß (am Elektromotor)
- 10:: Elektrowerkzeug
- 11:: Elektrowerkzeug-Gehäuse
- 12:: Handgriff
- 13:: Werkzeugaufnahme
- 14:: Schraubbit
- 15:: Energiespeicher
- 16:: Elektrowerkzeugschalter / Schalter
- 17:: Schaltergehäuse
- 18:: Betätigungsorgan
- 19:: Stößel
- 20:: Schaltmodul
- 21:: Schieber
- 22:: Drehmomentabschaltung
- 23:: Drehrad
- 24:: Potentiometer
- 25:: Zuleitung (zu Energiespeicher)
- 26:: Zuleitung (zu Elektromotor)

## Patentansprüche

1. Elektrowerkzeug, insbesondere Bohrmaschine, Akku-Bohrer, Akku-Schrauber, Akku-Schlagschrauber o. dgl., mit einer Werkzeugaufnahme (13), mit einem im Rechts- und/oder im Linkslauf betreibbaren Elektromotor (2) zum Antrieb der Werkzeugaufnahme (13) und mit einer Drehmomentabschaltung (22), die bei Erreichen eines auf die Werkzeugaufnahme (13) einwirkenden, voreingestellten Drehmoments den Elektromotor (2) abschaltet, wobei ein Mittel (6) zur Erkennung der Drehrichtung des Elektromotors (2) mit der Drehmomentabschaltung (22) zusammenwirkt, derart daß die Drehmomentabschaltung (22) im Linkslauf deaktiviert ist, **dadurch gekennzeichnet, daß** das Mittel (6) zur Erkennung der Drehrichtung eine Zener-Diode (7) und einen Widerstand (8) zum Abgreifen des Potenzials eines Anschlusses (9) am Elektromotor (2) umfaßt.

2. Elektrowerkzeug nach Anspruch 1, **dadurch gekennzeichnet, daß** das auf die Werkzeugaufnahme (13) einwirkende Drehmoment als Funktion des vom Elektromotor (2) aufgenommenen Stroms und/oder der Schlagdauer des Elektromotors (2) bestimmbar ist, und daß vorzugsweise das Drehmoment mittels eines Potentiometers (24) voreinstellbar ist.

3. Elektrowerkzeug nach Anspruch 1 oder 2, **dadurch gekennzeichnet, daß** mittels eines vom Mittel (6) zur Erkennung der Drehrichtung erzeugten Signals die Drehmomentabschaltung (22) aktivier- und/oder deaktivierbar ist.

4. Elektrowerkzeug nach Anspruch 1, 2 oder 3, **dadurch gekennzeichnet, daß** der Elektromotor (2) mit einer Schaltungsanordnung (1) in der Art einer Steuerelektronik im Rechts- und/oder im Linkslauf betreibbar ist, daß vorzugsweise die Schaltungsanordnung (1) einen im Motorstromkreis befindlichen Leistungshalbleiter (4) zum Schalten der Spannungsversorgung für den Elektromotor (2) umfaßt, und daß weiter vorzugsweise die Schaltungsanordnung (1) das Mittel (6) zur Erkennung der Drehrichtung des Elektromotors (2) aufweist.

5. Elelctanowerkzeug nach einem der Ansprüche 1 bis 4, **dadurch gekennzeichnet, daß** der Leistungshalbleiter (4) mittels eines Mikroprozessors (5) gesteuert wird, daß vorzugsweise mittels der Zener-Diode (7) sowie mittels des Widerstandes (8) ein Signal beim Linkslauf des Elektromotors (2) erzeugt wird, das insbesondere dem Mikroprozessor (5) zugeführt wird, und daß weiter vorzugsweise der Mikroprozessor (5) bei Vorliegen des Signals die Drehmomentabschaltung (22) deaktiviert sowie bei Nichtvorliegen des Signals die Drehmomentabschaltung (22) aktiviert.

6. Schaltungsanordnung in der Art einer Steuerelektronik für den Betrieb im Rechts- und/oder im Linkslauf eines Elektromotors (2) in einem Elektrowerkzeug (10), wobei die Schaltungsanordnung (1) ein Mittel (6) zur Erkennung der Drehrichtung des Elektromotors (2) aufweist, nach einem der Ansprüche 1 bis 5, **dadurch gekennzeichnet, daß** das Mittel (6) zur Erkennung der Drehrichtung eine Zener-Diode (7) und einen Widerstand (8) zum Abgreifen des Potenzials eines Anschlusses (9) am Elektromotor (2) umfaßt.

7. Schaltungsanordnung nach Anspruch 6, **dadurch gekennzeichnet, daß** die Schaltungsanordnung (1) in einem elektrischen Schalter (16) für das Elektrowerkzeug (10) angeordnet ist.

## Claims

1. Power tool, in particular a drill, a battery-powered drill, a battery-powered screwdriver, a battery-powered impact screwdriver or the like comprising a tool mount (13), with an electric motor (2) operated in clockwise and/or anticlockwise direction for driving the tool mount (13) and with a torque deactivation means (22), which on reaching a preset torque acting on the tool mount (13) switches off the electric motor (2), wherein a means (6) for identifying the rotational direction of the electric motor (2) cooperates with the torque deactivation means (22), such that the torque deactivation means (22) is deactivated in anticlockwise direction, **characterised in that** the means (6) for identifying the rotational direction comprises a Zener diode (7) and a resistor (8) for picking up the potential of a connector (9) on the electric motor (2)

2. Power tool according to claim 1, **characterised in that** the torque acting on the tool mount (13) can be determined as a function of the current taken up by the electric motor (2) and/or the strike duration of the electric motor (2), and **in that** preferably the torque can be preset by means of a potentiometer (24).

3. Power tool according to claim 1 or 2, **characterised in that** by means of a signal generated by means (6) for identifying the rotational direction the torque deactivation means (22) can be activated and/or deactivated.

4. Power tool according to claim 1, 2 or 3, **characterised in that** the electric motor (2) can be operated by a circuit arrangement (1) in the form of control electronics in clockwise and/or anticlockwise direction, **in that** preferably, the circuit arrangement (1) comprises a power semiconductor (4) located in the motor circuit for switching the power supply for the electric motor (2), and **in that** also preferably the circuit arrangement (1) comprises the means (6) for identifying the rotational direction of the electric motor (2).

5. Power tool according to any one of claims 1 to 4, **characterised in that** the power semiconductor (4) is controlled by means of a microprocessor (5), **in that** preferably by means of the Zener diode (7) and by means of the resistor (8) a signal is generated during the anticlockwise rotation of the electric motor (2), which is supplied in particular to the microprocessor (5), and **in that** also preferably in the presence of the signal the microprocessor (5) deactivates the torque deactivation means (22) and in the absence of the signal it activates the torque deactivation means (22).

6. Circuit arrangement in the form of control electronics for operating an electric motor (2) in an electric tool (10) in clockwise and/or anticlockwise direction, wherein the circuit arrangement (1) comprises means (6) for identifying the rotational direction of the electric motor (2), according to any one of claims 1 to 5, **characterised in that** the means (6) for identifying the rotational direction comprises a Zener diode (7) and a resistor (8) for picking up the potential of a connector (9) on the electric motor (2).

7. Circuit arrangement according to claim 6, **characterised in that** the circuit arrangement (1) is arranged in an electric switch (16) for the electric tool (10).

## Revendications

1. Outil électrique, notamment perceuse, perceuse sans fil, visseuse sans fiel, visseuses a chocs sans fil ou outils analogues comportant :
- un organe porte-outil (13).
- un moteur électrique (2) tournant à droite et/ou gauche pour entraîner l'organe porte-outil (13), ainsi qu'
- un limiteur de couple (22) qui, coupe le moteur électrique (2) lorsqu'on atteint un couple préréglé appliqué à l'organe porte-outil (13),
* un moyen (6) de détection du sens de rotation du moteur électrique (2) coopérant avec le limiteur de couple (22) de façon à neutraliser le limiteur de couple (22) pour la rotation à gauche,
outil **caractérisé en ce que**
le moyen (6) pour détecter le sens de rotation comporte une diode Zener (7) et une résistance (8) pour détecter le potentiel sur une borne (9) du moteur électrique (2).

2. Outil électrique selon la revendication 1,
**caractérisé en ce que**
- le couple appliqué à l'organe porte-outil (13) est une fonction du courant pris par le moteur électrique (2) et/ou de la durée de percussion du moteur (2), et
- le couple est de préférence préréglé par un potentiomètre (24).

3. Outil électrique selon la revendication 1 au 2,
**caractérisé en ce que**
le limiteur de couple (22) est activé et/ou neutralisé par le signal d'un moyen (6) détectant le sens de rotation.

4. Outil électrique selon les revendications 1, 2 ou 3,
**caractérisé en ce que**
- le moteur électrique (2) fonctionne avec un circuit (1) de type électronique de commande pour la marche à droite et/ou ou la marche à gauche,
- de préférence le circuit (1) comporte un semi-conducteur de puissance monté dans le circuit du courant du moteur pour commuter l'alimentation en tension du moteur électrique (2), et
- de manière encore plus préférentielle, le circuit (1) comporte le moyen (6) de détection du sens de rotation du moteur électrique (2).

5. Outil électrique selon l'une des revendications 1 à 4,
**caractérisé en ce que**
- le semi-conducteur de puissance (4) est commandé par un microprocesseur (5),
- de préférence à l'aide de la diode Zener (7) et de la résistance (8), lorsque le moteur électrique (2) tourne à gauche on génère un signal qui est appliqué notamment au microprocesseur (5), et
- de manière encore plus préférentielle, en présence du signal, le microprocesseur (5) neutralise le limiteur de couple (22) et en l'absence de signal, il active le limiteur de couple (22).

6. Circuit de type électronique de commande pour le fonctionnement à droite et/ou à gauche d'un moteur électrique (2) d'un outil électrique (10), le circuit (1) ayant un moyen (6) de détection du sens de rotation du moteur électrique (2), selon l'une des revendications 1 à 5,
circuit **caractérisé en ce que**
le moyen (6) de détection du sens de rotation comprend une diode Zener (7) et une résistance (8) pour détecter le potentiel d'une borne (9) du moteur électrique (2).

7. Circuit selon la revendication 6,
**caractérisé en ce que**
le circuit (1) est installé dans le commutateur électrique (16) de l'outil électrique (10).
